# EUROPEAN PATENT APPLICATION

(11) **EP 2 234 390 A2**
(43) Date of publication of application: **29.09.2010**
(21) Application number: 09166273.4
(22) Date of filing: 23.07.2009
(51) Int. Cl.: H04N 5/445

(54) **TV channel menu and method of showing the same**

(30) Priority: 26.03.2009 TW 98109922
(71) Applicant: Avermedia Technologies, Inc., Taipei (TW)
(72) Inventor: Chao, Chia-Chen, 235, Taipei (TW); Chen, Wen-Kang, 235, Taipei (TW); Chang, Chiao-Yung, 235, Taipei (TW); Liu, Meng-Tze, 235, Taipei (TW)
(74) Representative: Lang, Christian

(57) **Abstract**

A method of showing a TV channel menu (250; 350; 450; 550) includes the following steps. Firstly, an audience evaluation data including a first audience rating of a first TV program and a second audience rating of a second TV program is received. Then, the TV channel menu (250; 350; 450; 550) is opened. Afterwards, the TV channel menu (250; 350; 450; 550) including a first displaying block (253; 353) corresponding to the first TV program and a second displaying block (255; 256; 355; 356) corresponding to the second TV program is shown on a screen (200; 300; 400; 500). If the first audience rating is higher than the second audience rating, the first display block (253; 353) has a higher conspicuous degree than the second displaying block (255; 256; 355; 356).

## Description

The present invention relates to a TV channel menu, and more particularly to a TV channel menu having display blocks with different conspicuous degrees according to the audience ratings. The present invention also relates to a method of showing the TV channel menu.

Nowadays, the number of TV channels from a cable TV source or a wireless television source becomes more and more abundant. As such, the TV audiences usually fail to memorize the contents of TV programs from all TV channels. In other words, the audiences could only memorize some TV channels. For watching a TV program from a specified TV channel, an audience may input the TV channel number by using a remote controller. When the signal corresponding to the TV channel number is received by the TV set, the tuner of the TV set will choose the specified TV channel, so that the audience could watch the TV program corresponding to the specified TV channel.

If user or audience does not intend to watch a TV program of a specified TV channel, the user or audience usually uses the up/down keys of the remote controller to search many TV channels until a desired TV program is found. The conventional method of searching the TV program, however, is not user-friendly.

For facilitating the user or audience to search a desired TV channel, most TV tuners have the function of creating a TV channel menu on the screen of the TV set. Via the TV channel menu, the user could realize all TV channels and the titles of the TV programs corresponding to the TV channels. As a consequence, the user or audient could choose a desired TV channel or TV program from the TV channel menu. In other words, the TV channel menu could be referred as a user interface.

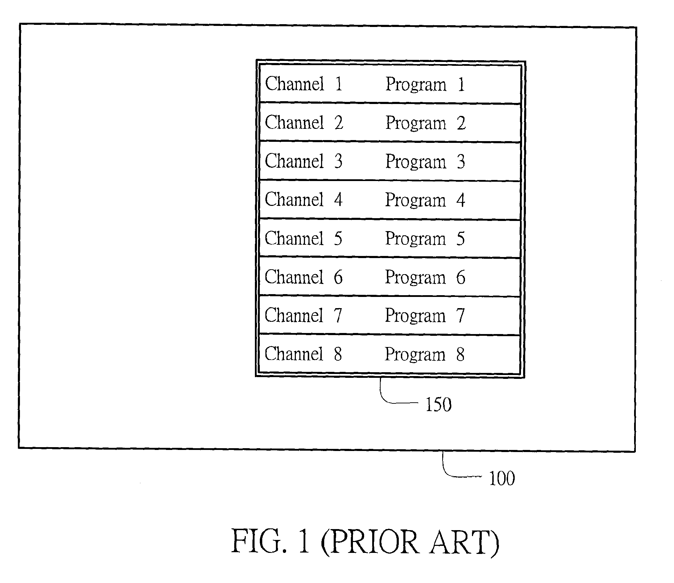

FIG. 1 schematically illustrates a TV channel menu according to the prior art. As shown in FIG. 1, the TV channel menu 150 is shown on a screen 100 when a specified key of the remote controller is depressed. The TV channel menu 150 includes several displaying blocks. Each of the displaying blocks includes a TV channel number and the title of the TV program corresponding to the TV channel number. Generally, the displaying blocks of the TV channel menu 150 are arranged in an ascending order of the TV channel numbers. For example, as shown in FIG. 1, there are eight identical displaying blocks. The first displaying block includes a TV channel number (Channel 1) and the title of the corresponding TV program (Program 1). Similarly, the second displaying block includes a TV channel number (Channel 2) and the title of the corresponding TV program (Program 2). The rest may be deduced by analogy. Under this circumstance, the user or audience can choose a desired TV channel or TV program from the TV channel menu 150.

For some TV channel menus, the displaying block further comprises other information (e.g. the playback time of the TV program). The conventional TV channel menus, however, need to be further improved.

The present invention provides a method of showing a TV channel menu on a screen, in which the display block corresponding to the program having highest audience rating has the highest conspicuous degree.

In accordance with an aspect of the present invention, there is provided a method of showing a TV channel menu. The method includes the following steps. Firstly, an audience evaluation data including audience ratings of multiple TV programs is received. Then, the TV channel menu is opened. Afterwards, the TV channel menu including multiple displaying blocks corresponding to the TV programs is shown on a screen. The displaying blocks exhibit respective conspicuous degrees. If a first TV program having the highest audience rating, a first display block corresponding to the first TV program has the highest conspicuous degree.

In accordance with another aspect of the present invention, there is provided a method of showing a TV channel menu. The method includes the following steps. Firstly, an audience evaluation data including a first audience rating of a first TV program and a second audience rating of a second TV program is received. Then, the TV channel menu is opened. Afterwards, the TV channel menu including a first displaying block corresponding to the first TV program and a second displaying block corresponding to the second TV program is shown on a screen. If the first audience rating is higher than the second audience rating, the first display block has a higher conspicuous degree than the second displaying block.

In accordance with a further aspect of the present invention, there is provided a TV channel menu. The TV channel menu includes a user interface, a first display block corresponding to a first TV program, and a second display block corresponding to a second TV program. The first display block is included in the user interface. The second display block is included in the user interface. If a first audience rating of the first TV program is higher than a second audience rating of the second TV program, the first display block has a higher conspicuous degree than the second displaying block.

The above contents of the present invention will become more readily apparent to those ordinarily skilled in the art after reviewing the following detailed description and accompanying drawings, in which:
FIG. 1 schematically illustrates a TV channel menu according to the prior art;
FIG. 2 schematically illustrates a TV channel menu according to a first embodiment of the present invention;
FIG. 3 schematically illustrates a TV channel menu according to a second embodiment of the present invention;
FIG. 4 schematically illustrates a TV channel menu according to a third embodiment of the present invention;
FIG. 5 schematically illustrates a TV channel menu according to a fourth embodiment of the present invention; and
FIG. 6 is a schematic functional block diagram illustrating a method of acquiring the audience evaluation data by using a computer system.

The present invention will now be described more specifically with reference to the following embodiments. It is to be noted that the following descriptions of preferred embodiments of this invention are presented herein for purpose of illustration and description only. It is not intended to be exhaustive or to be limited to the precise form disclosed.

The present invention provides various TV channel menus to be used as user interfaces. According to audience ratings of an audience evaluation data, the displaying blocks of the TV channel menu exhibit respective conspicuous degrees. The display block corresponding to the program having highest audience rating has the highest conspicuous degree.

Moreover, the audience evaluation data includes the audience ratings of all TV programs. When the TV channel menu is shown on a screen, the conspicuous degrees of the displaying blocks are in positive correlation with the audience ratings.

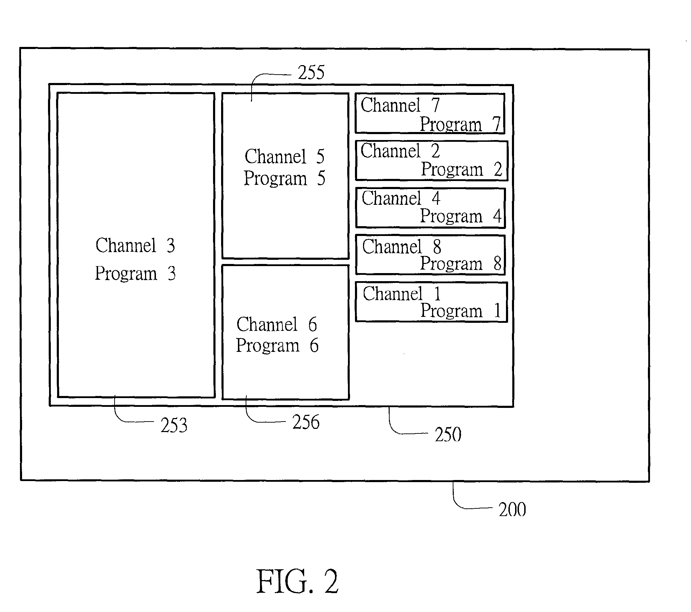

FIG. 2 schematically illustrates a TV channel menu according to a first embodiment of the present invention. The TV channel menu 250 is shown on a screen 200. The TV channel menu 250 includes several displaying blocks. According to an audience evaluation data, the displaying blocks exhibit respective conspicuous degrees. In this embodiment, the conspicuous degrees are correlated with the displaying areas of the displaying blocks. In addition, the audience evaluation data includes the audience ratings corresponding to a plurality of TV programs. For example, if the Program 3 corresponding to the Channel 3 has the highest audience rating, the display block 253 has the highest conspicuous degree in the TV channel menu 250. In other words, the display block 253 has the largest displaying area. If the Program 5 corresponding to the Channel 5 has the second highest audience rating, the display block 255 has a second highest conspicuous degree in the TV channel menu 250. In other words, the display block 255 has the second largest displaying area. If the Program 6 corresponding to the Channel 6 has the third highest audience rating, the display block 256 has a third highest conspicuous degree in the TV channel menu 250. In other words, the display block 256 has the third largest displaying area. Since the Program 7, the Program 2, the Program 4, the Program 8 and the Program 1 have relatively lower audience ratings, the display blocks of these TV programs have relatively lower conspicuous degrees in the TV channel menu 250. That is, these display blocks have relatively smaller displaying areas.

Please refer to FIG. 2 again. The conspicuous degrees of the display blocks are classified into four levels. In addition, the audience ratings of the audience evaluation data include the real-time audience ratings or the long-term audience ratings. In a case that the audience ratings are the real-time audience ratings, the contents of the display blocks are dynamically changed as the TV channel menu 250 is opened at different time spots. For example, once the TV channel menu 250 is shown on the screen 200, the user or audience can realize the audience ratings of the TV programs in real time. Under this circumstance, the user or audience can choose a desired TV channel or TV program from the TV channel menu 250.

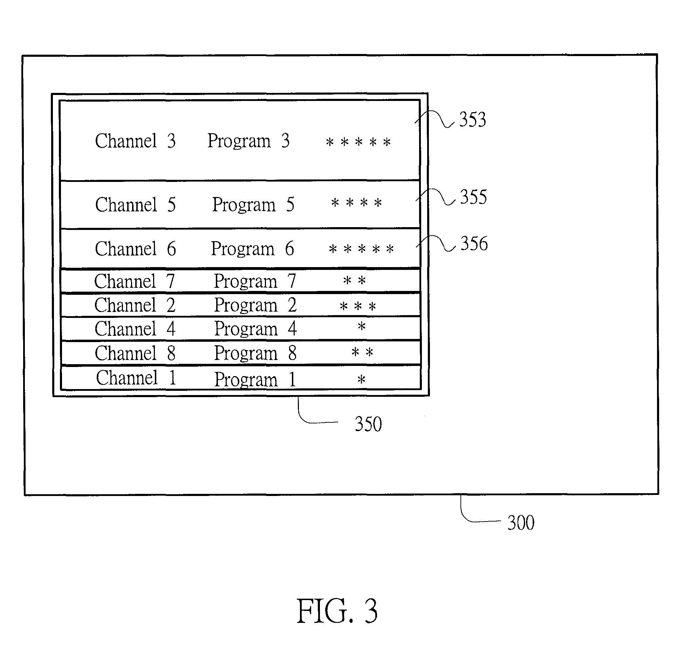

FIG. 3 schematically illustrates a TV channel menu according to a second embodiment of the present invention. The TV channel menu 350 is shown on a screen 300. The TV channel menu 350 includes several displaying blocks. The audience ratings of the audience evaluation data also include the real-time audience ratings or the long-term audience ratings. According to an audience evaluation data, the displaying blocks exhibit respective conspicuous degrees.

In a case that the audience ratings of the audience evaluation data are the real-time audience ratings, the conspicuous degrees are correlated with the displaying areas of the displaying blocks. For example, if the Program 3 corresponding to the Channel 3 has the highest real-time audience rating, the display block 353 has the highest conspicuous degree in the TV channel menu 350. In other words, the display block 353 has the largest displaying area. If the Program 5 corresponding to the Channel 5 has the second highest real-time audience rating, the display block 355 has a second highest conspicuous degree in the TV channel menu 350. In other words, the display block 355 has the second largest displaying area. If the Program 6 corresponding to the Channel 6 has the third highest real-time audience rating, the display block 356 has a third highest conspicuous degree in the TV channel menu 350. In other words, the display block 356 has the third largest displaying area. Since the Program 7, the Program 2, the Program 4, the Program 8 and the Program 1 have relatively lower real-time audience ratings, the display blocks of these TV programs have relatively lower conspicuous degrees in the TV channel menu 350. That is, these display blocks have relatively smaller displaying areas.

Whereas, in a case that the audience ratings of the audience evaluation data are the long-term audience ratings, the conspicuous degrees are correlated with the number of asterisk marks contained in the displaying blocks.

As a consequence, when the TV channel menu 350 is shown on the screen 300, the user or audience can realize the TV programs having the better real-time audience ratings and long-term audience ratings. Under this circumstance, the user or audience can choose a desired TV channel or TV program from the TV channel menu 350.

In some embodiments, the conspicuous degrees are correlated with the displaying areas of the displaying blocks when the audience ratings are the long-term audience ratings, and the conspicuous degrees are correlated with the number of asterisk marks contained in the displaying blocks when the audience ratings are the real-time audience ratings.

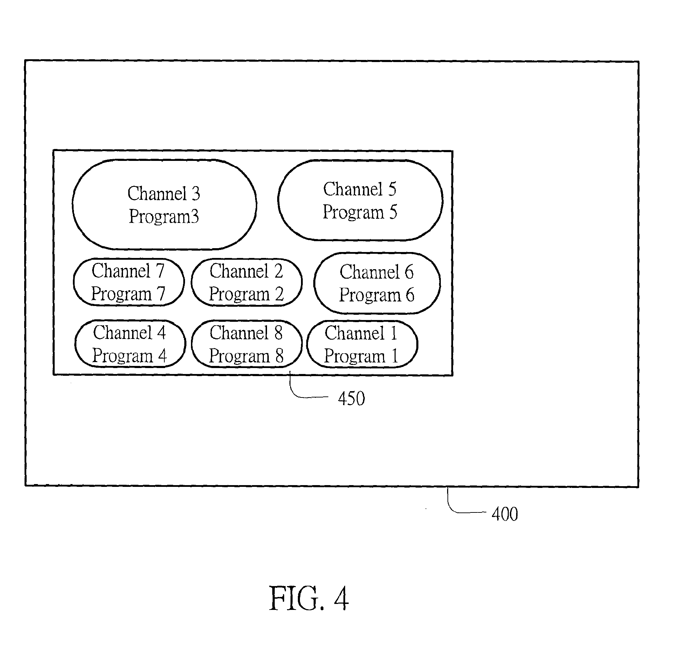

FIG. 4 schematically illustrates a TV channel menu according to a third embodiment of the present invention. The TV channel menu 450 is shown on a screen 400. The TV channel menu 450 includes several displaying blocks. In this embodiment, the display blocks are elliptical. In addition, the displaying areas of the displaying blocks are in positive correlation with the audience ratings.

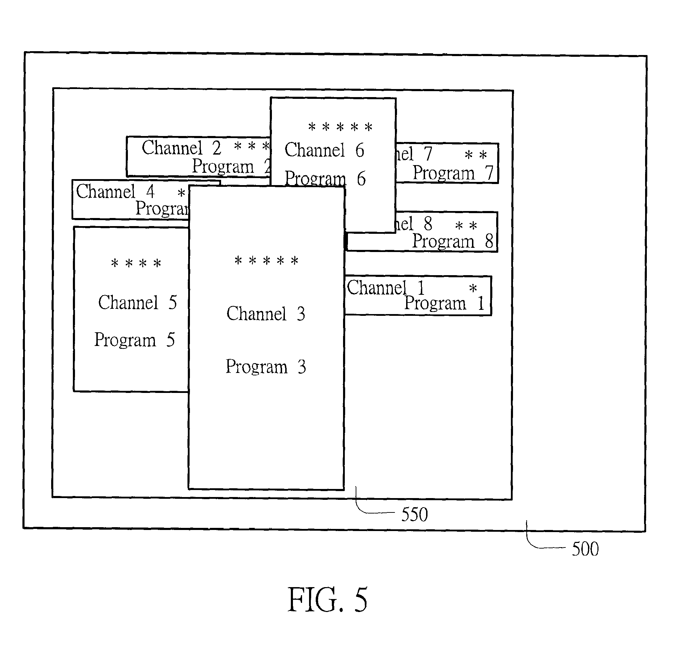

FIG. 5 schematically illustrates a TV channel menu according to a fourth embodiment of the present invention. The TV channel menu 550 is shown on a screen 500. The TV channel menu 550 includes several displaying blocks. The displaying areas of the displaying blocks are also in positive correlation with the audience ratings. In addition, the displaying blocks are superimposed on each other. The display block having the highest conspicuous degree is displayed in the forefront of the TV channel menu 550.

In the above embodiments, the conspicuous degrees are correlated with the displaying areas of the displaying blocks or the number of asterisk marks contained in the displaying blocks. It is noted that, however, those skilled in the art will readily observe that numerous modifications and alterations may be made while retaining the teachings of the invention. For example, the conspicuous degrees could be correlated with the colors of the displaying blocks, the gray levels of the displaying blocks or scintillating degrees of the displaying blocks.

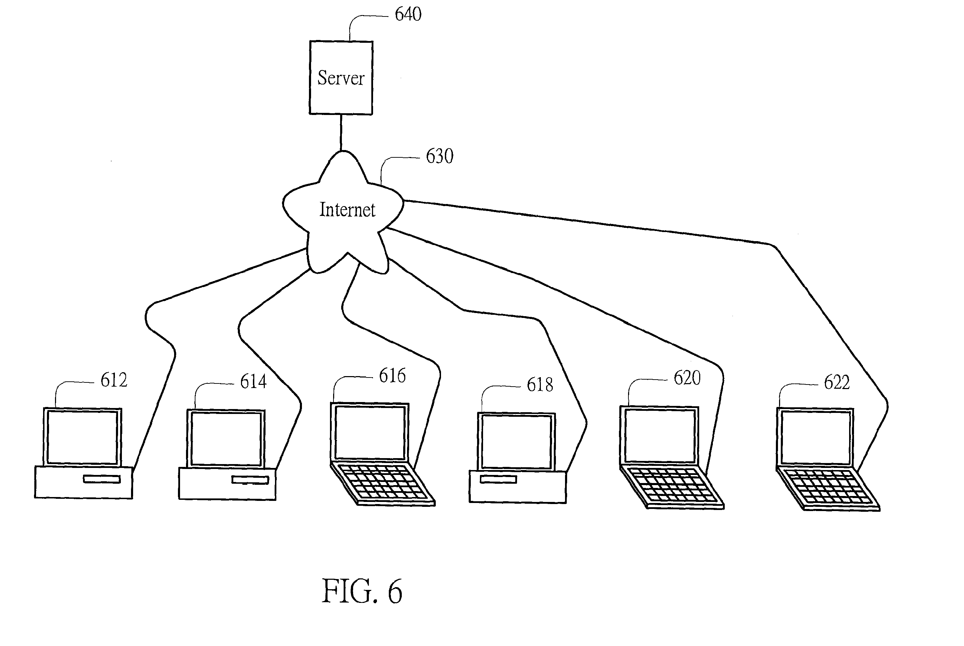

There are several methods of acquiring the audience evaluation data according to the present invention. Hereinafter, a method of acquiring the audience evaluation data will be illustrated with reference to FIG. 6. FIG. 6 is a schematic functional block diagram illustrating a method of acquiring the audience evaluation data by using a computer system. The computer systems 612, 614, 616, 618, 620 and 622 have built-in TV tuner cards (not shown). As such, the users or audiences can watch TV programs by these computer systems. The video signals of the TV programs are wireless or wired signals in an analog or digital format.

Through the Internet 630, the signals corresponding to the TV channel numbers that are being watched by the users or audiences are transmitted from the TV tuner cards of the computer systems 612∼622 to a server 640. The server 640 will continuously receive the signals corresponding to the TV channel numbers from the computer systems 612∼622. In addition, the server 640 will continuously gather statistics on these TV channel number signals, thereby acquiring the audience evaluation data. The audience ratings of the audience evaluation data include the real-time audience ratings or the long-term audience ratings. That is, when the TV channel menu is shown on the screen of each of the computer systems 612∼622, the audience evaluation data are obtained from the server 640. As a result, the TV channel menu could be shown in the above-mentioned fashions.

Moreover, the audience evaluation data could be offered by the cable TV system operator. The cable TV system operator could entrust the audience rating surveys to any credible audience rating survey organization. The audience evaluation data including the real-time audience ratings or the long-term audience ratings are then transmitted to the cable TV system operator. As a consequence, the audience evaluation data could be added into the TV signal by the cable TV system operator. After the TV signal including the audience evaluation data is transmitted to the cable TV subscriber, the user or audience can acquire the audience evaluation data via the TV tuner card. As a result, the TV channel menu could be shown in the above-mentioned fashions.

From the above description, the displaying blocks of the TV channel menu of the present invention exhibit respective conspicuous degrees according to the audience evaluation data. As a result, the user or audience can choose a desired TV channel or TV program from the TV channel menu.

While the invention has been described in terms of what is presently considered to be the most practical and preferred embodiments, it is to be understood that the invention needs not to be limited to the disclosed embodiment. On the contrary, it is intended to cover various modifications and similar arrangements included within the spirit and scope of the appended claims which are to be accorded with the broadest interpretation so as to encompass all such modifications and similar structures.

The features disclosed in the foregoing description, in the claims and/or in the accompanying drawings may, both separately and in any combination thereof, be material for realizing the invention in diverse forms thereof.

## Claims

1. A method of showing a TV channel menu (250; 350; 450; 550),
**characterized in that** the method comprises steps of:
receiving an audience evaluation data including audience ratings of multiple TV programs;
opening the TV channel menu (250; 350; 450; 550); and
showing the TV channel menu (250; 350; 450; 550) including multiple displaying blocks (253; 255; 256; 353; 355; 356) corresponding to the TV programs on a screen (200; 300; 400; 500), wherein the displaying blocks (253; 255; 256; 353; 355; 356) exhibit respective conspicuous degrees, and if a first TV program having the highest audience rating, a first display block (253; 353) corresponding to the first TV program has the highest conspicuous degree.

2. The method according to claim 1, **characterized in that** the first display block (253) has the largest display area in comparison with any other display block (255; 256) in the TV channel menu (250), the first display block (353) has the most number of marks in comparison with any other display block (355; 356) in the TV channel menu (350), the first display block has a color or gray level distinguishable from other display blocks in the TV channel menu, or the first display block exhibits a scintillating effect on the screen.

3. The method according to claim 1, **characterized in that** the audience ratings include real-time audience ratings and long-term audience ratings.

4. The method according to claim 1, **characterized in that** the audience evaluation data is obtained from a server (640) through the Internet (630), multiple signals corresponding to TV channel numbers are transmitted from TV tuner cards of multiple computer systems (612; 614; 616; 618; 620; 622) to the server (640), and the server (640) gathers statistics on the signals corresponding to TV channel numbers so as to acquire the audience evaluation data.

5. The method according to claim 1, **characterized in that** the audience evaluation data is offered to multiple cable TV subscribers by a cable TV system operator wherein the audience evaluation data is obtained by a credible audience rating survey organization according to an audience rating survey, and then transmitted to the cable TV system operator.

6. A method of showing a TV channel menu (250; 350; 450; 550),
**characterized in that** the method comprises steps of:
receiving an audience evaluation data including a first audience rating of a first TV program and a second audience rating of a second TV program;
opening the TV channel menu (250; 350; 450; 550); and
showing the TV channel menu (250; 350; 450; 550) including a first displaying block (253; 353) corresponding to the first TV program and a second displaying block (255; 256; 355; 356) corresponding to the second TV program on a screen (200; 300; 400; 500), wherein if the first audience rating is higher than the second audience rating, the first display block (253; 353) has a higher conspicuous degree than the second displaying block (255; 355).

7. The method according to claim 6, **characterized in that** the first display block (253) has a larger display area than the second displaying block (255; 256), the first display block (353) has more number of marks than the second displaying block (355; 356), the first display block has a color or gray level distinguishable from the second displaying block, or the first display block exhibits a scintillating effect on the screen.

8. The method according to claim 6, **characterized in that** the first audience rating and the second audience rating include real-time audience ratings and long-term audience ratings.

9. The method according to claim 6, **characterized in that** the audience evaluation data is obtained from a server (640) through the Internet (630), multiple signals corresponding to TV channel numbers are transmitted from TV tuner cards of multiple computer systems (612; 614; 616; 618; 620; 622) to the server (640), and the server (640) gather statistics on the signals corresponding to TV channel numbers so as to acquire the audience evaluation data.

10. The method according to claim 6, **characterized in that** the audience evaluation data is offered to multiple cable TV subscribers by a cable TV system operator wherein the audience evaluation data is obtained by a credible audience rating survey organization according to an audience rating survey, and then transmitted to the cable TV system operator.

11. A TV channel menu (250; 350; 450; 550), **characterized in that** the TV channel menu (250; 350; 450; 550) comprises:
a user interface;
a first display block (253; 353) corresponding to a first TV program and included in the user interface;
a second display block (255; 256; 355; 356) corresponding to a second TV program and included in the user interface,
wherein if a first audience rating of the first TV program is higher than a second audience rating of the second TV program, the first display block (253; 353) has a higher conspicuous degree than the second displaying block (255; 256; 355; 356).

12. The TV channel menu according to claim 11, **characterized in that** the first display block (253) has a larger display area than the second displaying block (255; 256), the first display block (353) has more number of marks than the second displaying block (355; 356), the first display block has a color or gray level distinguishable from the second displaying block, or the first display block exhibits a scintillating effect on the screen.

13. The TV channel menu according to claim 11, **characterized in that** the first audience rating and the second audience rating include real-time audience ratings and long-term audience ratings.

14. The TV channel menu according to claim 11, **characterized in that** the audience evaluation data is obtained from a server (640) through the Internet (630), multiple signals corresponding to TV channel numbers are transmitted from TV tuner cards of multiple computer systems (612; 614; 616; 618; 620; 622) to the server (640), and the server (640) gathers statistics on the signals corresponding to TV channel numbers so as to acquire the audience evaluation data.

15. The TV channel menu according to claim 11, **characterized in that** the audience evaluation data is offered to multiple cable TV subscribers by a cable TV system operator wherein the audience evaluation data is obtained by a credible audience rating survey organization according to an audience rating survey, and then transmitted to the cable TV system operator.
